(19) Europäisches Patentamt / European Patent Office / Office européen des brevets

(11) **EP 2 566 078 B1**

(12) **EUROPEAN PATENT SPECIFICATION**

(45) Date of publication and mention
of the grant of the patent:
**12.11.2014 Bulletin 2014/46**

(51) Int Cl.:
*H04J 3/14* (2006.01)          *H04J 3/06* (2006.01)
*G06F 17/18* (2006.01)          *H04L 1/20* (2006.01)

(21) Application number: **11179296.6**

(22) Date of filing: **30.08.2011**

(54) **Determining a quality of a clock signal**

Bestimmung der Qualität eines Taktsignals

Détermination de qualité d'un signal d'horloge

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2013 Bulletin 2013/10**

(73) Proprietor: **Siemens Aktiengesellschaft**
**80333 München (DE)**

(72) Inventors:
• **Buhl, Michael Bernhard**
**81373 München (DE)**
• **Obradovic, Dragan**
**85521 Ottobrunn (DE)**
• **Steindl, Günter**
**92284 Poppenricht (DE)**
• **Wolfrum, Philipp**
**81539 München (DE)**

(56) References cited:
**EP-A2- 1 172 960          JP-A- 2003 179 142**
**US-A1- 2009 161 744**

• **GADERER G ET AL: "Quality monitoring in clock synchronized distributed systems", FACTORY COMMUNICATION SYSTEMS, 2006 IEEE INTERNATIONAL WORKSHOP ON JUNE 27, 2006, PISCATAWAY, NJ, USA,IEEE, PISCATAWAY, NJ, USA, 1 January 2006 (2006-01-01), pages 13-21, XP031741867, ISBN: 978-1-4244-0379-0**
• **JUDAH LEVINE: "Incorporating Data from a Primary Frequency Standard Into a Time Scale", IEEE TRANSACTIONS ON ULTRASONICS, FERROELECTRICS AND FREQUENCY CONTROL, IEEE, US, vol. 44, no. 3, 1 May 1997 (1997-05-01), pages 629-636, XP011089976, ISSN: 0885-3010, DOI: 10.1109/58.658316**

**Description**

The invention relates to a method and to a device for determining a quality of a clock signal in a slave device.

Clock synchronization is a basis for the proper operation of process automation and control systems. Typically, each element of an automation system (referred to as slave device) has an internal clock (driven by a quartz) which has to be synchronized with a clock of an (a priori selected) master device.

[Garderer G et al.: Quality Monitoring in Clock Synchronized Distributed Systems, Factory Communication Systems, 2006, IEEE International Workshop on June 27, 2006, pages 13-21, ISBN031741867] relates to a clock synchronization in distributed computer systems that is an enabler for the introduction of real-time. An approach for cascaded synchronized clocks is presented to monitor their own quality without major further communication effort by using the well-known Allan deviation.

[Levine J: Incorporation Data from a Primary Frequency Standard Into a Time Scale, IEEE Trans. on Ultrasonics, Ferroelectrics and Frequency Control, vol.44, no.3, May 1, 2997, pages 629-636] relates to a time-scale algorithm that seeks to address the problems that it is difficult to combine data from a primary frequency standard with the time-difference measurements that are usually used as input to most time scales and that there is often no natural way of inserting this kind of datum into the scale in a manner that is statistically robust.

[US 2009/0161744 A1] relates to a system and a method for estimating and monitoring timing errors in packet data networks. The T1 timing error is estimated by filtering and processing timing errors of the associated pseudowire packet stream from which the T1 circuit is derived.

[EP 1 172 960 A2] relates to an apparatus and method for determining the quality of a digital signal. Such incoming digital signal is sampled with a number n of samples per defined pulse width using clock cycles. An edge detector detects the edge position of a pulse of the sampled digital signal and a counter counts the clock cycles between at least a first edge and a second edge detected by the edge detector. A deviation detector then compares the counted clock cycles with a pre-stored reference-value in order to provide a deviation value as a measure for the instantaneous quality of the digital signal. This deviation value is then fed to a rework unit that outputs a value that is a measure for the quality of the digital signal.

Profinet-based systems use a given protocol (based, among others, on the IEEE 1588-2008 standard) to enable synchronization. The synchronization in this case is based on sequentially transmitting so called SYNC-messages from one element to the next in a chain structure. Locally at the slave device, a control algorithm is used to generate a smooth version of the master time estimate, which is called "controlled time" and is the output of the local slave device. The controlled time can then be used by other applications as a precise synchronized time for control and/or communication purposes.

However, existing solutions are neither able to determine a quality of the value of the controlled time nor to detect sudden external disturbances applied to the synchronization hardware, e.g. vibrations or shocks.

The objective is thus to overcome the disadvantages mentioned above and in particular to provide a solution that allows the slave device to determine the quality of a controlled time signal and/or to detect sudden disturbances based on, e.g., mechanical impact.

This problem is solved according to the features of the independent claims. Further embodiments result from the depending claims.

In order to overcome this problem, a method is provided for determining a quality of a clock signal in a slave device,

- wherein a statistical measure for a tracking error is determined,
- wherein a quality of the clock signal is determined based on a deviation of the tracking error from the statistical measure.

Hence, a certain kind of disturbance, e.g., at least one short mechanical impact on the slave device, can be determined by detecting a non-typical variation of the tracking error, in particular the tracking error having a deviation that is more than a predetermined threshold. The non-typical variation can be determined by the deviation from the statistical measure.

This solution can be used to determine whether a short disturbance occurred at the slave device and/or whether the quality of the clock signal is good or bad (e.g., if the deviation stays below a predetermined value that is considered bad). Also, counter-measures can be initiated based on the level of quality of the clock signal. It is noted that more than two levels of quality (good, bad) may exist leading to different actions (or no action at all).

It is also an option, that the slave device indicates the quality of the clock signal, e.g., raises an alarm flag. Such indication can be done locally at the slave device (e.g., towards an application running on the slave device) and/or a message can be sent to at least one element of the communication network, e.g., the master device and/or any other slave device and/or the client application using the synchronized time signal.

In an embodiment, the statistical measure comprises a variance and/or a standard deviation.

In another embodiment, the variance and/or a standard deviation is/are determined based on a filter function.

Various filter functions can be used. One example is a lowpass filter.

In a further embodiment, the filter function corresponds to

$$z(k) = (1-a) \cdot z(k-1) + a \cdot e_T^2(k)$$
$$VAR(e_T) = z(k) \qquad\qquad ,$$
$$\sigma(e_T) = \sqrt{z(k)}$$

with

$e_T$     tracking error,
$\sigma(e_T)$     standard deviation of the tracking error,
VAR $(e_T)$     variance of the tracking error,
k     step,
a     parameter of the filter.

In a next embodiment, based on the quality of the clock signal, a disturbance of the clock signal is determined.

It is also an embodiment that

- in case the quality of the clock signal is below a given threshold, a master time estimate signal is used by the slave device and
- in case the quality of the clock signal at least reaches the given threshold, a controlled time signal is used by the slave device.

Hence, advantageously, in case a disturbance is detected via a low quality signal, the master time estimate signal is used, which is not controlled by the slave device and does not contain the local disturbance applied to the slave device. This can be done for some cycles after the disturbance has been detected. Then, the controlled time signal of the slave device can be used again.

Pursuant to another embodiment, the controlled time signal is based on the tracking error and the tracking error is based on a difference between the master time estimate signal and the controlled time.

It is noted that the controlled time is based on the clock of the slave device, in particular on the quartz providing clock signals for the slave device.

It is further noted that the slave device may comprise a PI-controller that processes the tracking error and conveys a controlled signal to the clock; the clock's output is fed back to the entry of the PI-controller, subtracted from the master time estimate resulting in the subsequent tracking error. The adaptation can be conducted at discrete time steps that are based on the cycles of the slave's clock, in particular based on a sync message arriving at the slave device (e.g., provided along the chain comprising previous slave devices and the master device).

Pursuant to a next embodiment, an interval used for communication purposes is adjusted based on the quality of the clock signal.

Hence, the level of quality can be used to adjust the communication interval required by client applications using the output of the synchronization process as a time basis. A good common time basis allows to pack communication time slots of different clients sharing one network more densely without causing interference. A good synchronization can thus lead to shorter time slots used for communication purposes, which increases available bandwidth and the overall performance of the system.

According to an embodiment,

- a standard deviation of the tracking error is determined,
- it is determined whether the tracking error is unlikely with respect to the standard deviation by determining a maximum tracking error which could have been caused by a local disturbance,
- a disturbance is determined based on comparing the maximum tracking error with a function of an estimated variance of the tracking error.

According to another embodiment, the maximum tracking error which could have been caused by the local disturbance is determined by

$$e_{mt}(k) = \max(|e_T(k)|, |e_T(k) + e_T(k-1)|) \ .$$

In yet another embodiment, the function of an estimated variance of the tracking error corresponds to

$$F = a_0^2 + a_1 \cdot VAR(e_T) \ ,$$

wherein parameters $a_0$ and $a_1$ constitute a trade-off between false positive detections and false negative detections.

According to a next embodiment, the local disturbance comprises a mechanical shock or a vibration.

Hence, any mechanical impact applied to the clock can be detected, in particular in case it is sufficiently strong compared to a general noise level and sufficiently short with regard to a predefined number of clock cycles.

The problem stated above is also solved by a device for determining a quality of a clock signal comprising a processing unit that is arranged for

- determining a statistical measure for a tracking error,
- determining a quality of the clock signal based on a deviation of the tracking error from the statistical measure.

It is noted that the steps of the method stated herein may be executable on this processing unit as well.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

According to an embodiment, the device is a slave device in a chain of several slave devices, which are provided a master clock signal by a master device.

According to a further embodiment,

- the device comprises a PI-controller that processes the tracking error and conveys a controlled signal to a clock,
- the clock's output is fed back to the entry of the PI-controller, subtracted from a master time estimate resulting in a subsequent tracking error.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Furthermore, the problem stated above is solved by a system comprising at least one device as described herein.

The aforementioned characteristics, features and advantages of the invention as well as the way they are achieved will be further illustrated in connection with the following examples and considerations as discussed in view of the figures.

Fig. 1 shows a structure of a clock synchronization control loop that may be implemented in a slave device;

Fig. 2 shows a normalized frequency drift $(f - f_0)/f_0$ caused by mechanical shocks.

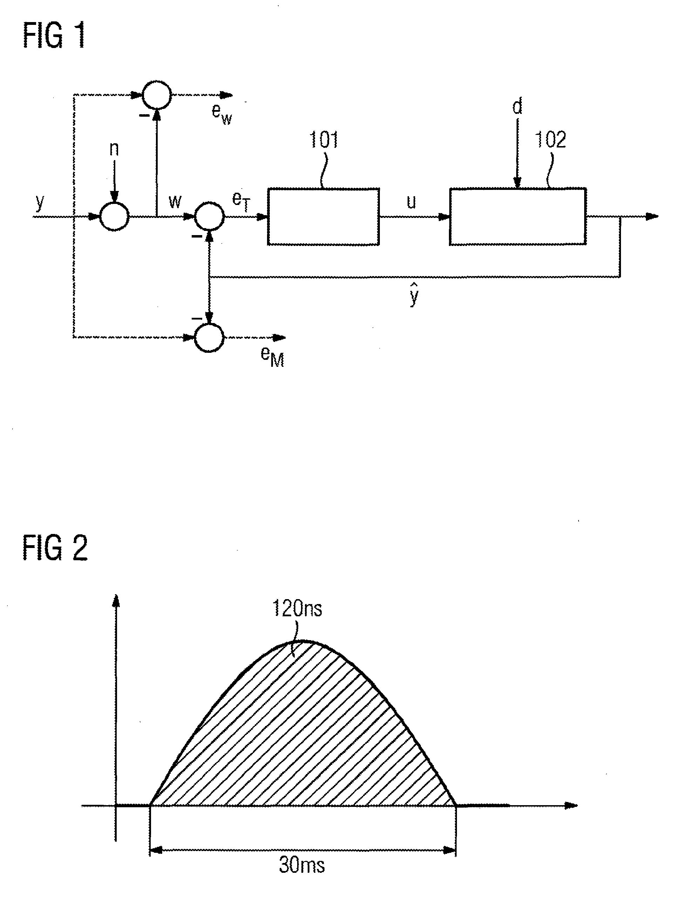

Fig.1 shows a structure of a clock synchronization control loop that may be implemented in a slave device.

In case the clock of the slave device is not (significantly) disturbed by external disturbances (e.g. shocks or vibrations), the only relevant disturbance for the clock synchronization process is a signal n by which an estimated master time w differs from a true master time y. It is noted that the disturbance n comprises all noise and disturbances between the master and this actual slave device (cumulated noise).

An error $e_T$ denotes a tracking error that is input to a PI-controller 101 (i.e. a controller comprising a proportional (P) and an integral (I) portion). The output of the PI-controller 101 is referred to as signal u, which is fed to a controlled clock 102 of the slave device. The output of the controlled clock 102 is denoted as a controlled time $\hat{y}$), which is subtracted from the estimated master time w.

The controlled clock 102 may be subject to disturbances d (e.g., shocks or vibrations) that lead to a (e.g.,

temporally) deteriorated clock signal.

A true error $e_M$ is depicted in Fig.1 as a difference between the true master time y and the controlled time $\hat{y}$ which corresponds to a difference between the tracking error $e_T$ and the disturbance n.

An error $e_W$ indicates a difference between the estimated master time w and the true master time y.

The true master time y can be estimated by a Precision Time Protocol (according to, e.g., IEEE 1588) as a noisy estimate w. This estimate w is a reference signal for the PI-controller 101 and the controlled clock 102 generating a controlled time $\hat{y}$.

The tracking error can be defined as a difference between master time estimate w and controlled time $\hat{y}$, i.e.

$$e_T = w - \hat{y}$$

The tracking error $e_T$ is a stochastic variable due to noises occurring in the estimation process and external disturbances. Its variance VAR ($e_T$), however, does not fluctuate too much over time and can be estimated quite accurately locally by using a low pass filter. Hence, the variance VAR ($e_T$) can be used as a measure for the volatility of the tracking error $e_T$.

Locally (external) disturbances d have a direct impact on the controlled clock and thus also directly affect the tracking error $e_T$. Therefore, a sudden external disturbance can be detected by monitoring the current tracking error $e_T$, if it is larger than a predetermined threshold (what can be expected for the tracking error, e.g., based on a previous synchronization interval and/or the previously known variance for the tracking error).

Exemplary Scenario:

Due to estimation errors concerning the line delay and bridge delay the estimate of the master time w differs from the true master time by the disturbance n. The mean value (bias) of such a disturbance n varies randomly between the slave devices, while the variance of the disturbance n increases along the slave devices that are arranged in a chain topology.

The master time estimate w provided to the PI-controller 101 and consequently also the tracking error $e_T$ are stochastic variables.

A controlled time $\hat{y}$ at a step k+1 can be denoted as:

$$\hat{y}(k+1) = \hat{y}(k) + \Delta S \cdot u(k) + d(k) \cdot u(k) ,$$

i.e. based on a controlled time $\hat{y}$ at a previous (time) step k. $\Delta S = S(k+1) - S(k)$ refers to a number of ticks of the slave clock between step $k$ and a subsequent one $k+1$. $d(k)$ refers to a disturbance (e.g., a physical shock applied to the slave device disturbing the slave clock). $u(k)$ is an output of the PI-controller 101 at the step k and corresponds to a ratio of the frequency between the master clock and the slave clock. As an example, $\Delta S$ may be assumed to be constant.

From the dynamics of the controlled time $\hat{y}(k+1)$, it can be seen that disturbances $d(k)$ acting upon the clock of the slave device directly influence the controlled time $\hat{y}$. As the tracking error $e_T$ and the true error $e_M$ directly depend on the controlled time $\hat{y}$, both errors are influenced by local disturbances in the same way. Thus, the part of the tracking error $e_T$ that is caused by local disturbances also contains information about the true error $e_M$.

The following description concerns the detection of short but significant local disturbance.

For detecting short but significant local disturbances, e.g., shocks applied to the slave device, the tracking error $e_T$ is examined. Without such disturbances the tracking error $e_T$ is mainly excited by the disturbance n, which can be assumed to be normal distributed. Hence, the tracking error $e_T$ with a known probability remains within an interval (e.g., the probability for $e_T$ to stay inside an interval [$-3\sigma, 3\sigma$] amounts to 0,9973).

Once the clock of the slave device is disturbed by a significant local event, the amplitude of the tracking error $e_T$ may reach a value which is very unlikely with respect to the assumed normal distribution, which in return allows detecting such local disturbance $d(k)$.

Accordingly, the detection of short but significant local disturbances may comprise the following steps:

(a) determine a standard deviation $\sigma(e_T)$ of the tracking error $e_T$ ; and
(b) decide whether the tracking error $e_T$ is unlikely with respect to the standard deviation $\sigma(e_T)$.

Estimating the standard deviation of the tracking error:

The standard deviation $\sigma(e_T)$ and/or the variance VAR $(e_T)$ can be determined utilizing the following filter $z(k)$ :

$$z(k) = (1-a) \cdot z(k-1) + a \cdot e_T^2(k)$$
$$VAR(e_T) = z(k)$$
$$\sigma(e_T) = \sqrt{z(k)}$$

Based on such filter $z(k)$, the estimated standard deviation matches well with the true standard deviation. For example, the parameter a of the filter can be set to

$$a(k) = \max(1/k, a_0) \quad \text{with} \quad a_0 = 0.002 \text{ .}$$

Deciding whether a significant local disturbance has occurred
Mechanical shocks are the most relevant examples for short but significant local disturbances. Therefore, such shocks can be used to demonstrate the ability of detecting short significant local disturbances.
Fig.2 shows a normalized frequency drift $(f - f_0)/f_0$ caused by mechanical shocks. For example, an effect of a shock can be modeled by a temporary variation of a quartz frequency as shown in Fig.2. The integral of the frequency variation is equal to the overall tracking error caused by one shock. As shocks may be spread over two time steps of the local clock, the peak value of the tracking error will in general be less than 120ns.
In order to detect a shock, the following approach is suggested:

(a) A maximum tracking error which could have been caused by a shock (or other local disturbances) is determined:

$$e_{mt}(k) = \max(| e_T(k) |, | e_T(k) + e_T(k-1) |)$$

(b) The maximum tracking error, in particular $e_{mt}^2(k)$, can be compared with an appropriate function of the estimated variance of the tracking error. Based on such comparison it can be decided whether a shock has occurred. An appropriate function can be

$$F = a_0^2 + a_1 \cdot VAR(e_T) \text{ ,}$$

wherein the choice of the parameters $a_0$ and $a_1$ constitutes a trade-off between false positive detections or type I errors (a non-existing shock is detected) and false negative detections or type II errors (an existing shock is not detected). In order to find a good choice for the two parameters the difference between true positive detections and false positive detections can be optimized via a numerical approach (e.g., via simulation). For example, $a_0$ may be set to 120ns and $a_1$ may be set to 22.

For the optimization of the parameters $a_0$ and $a_1$ several or all slave devices in a chain structure between the master device and an actual slave device can be considered. However due to the higher level of general noise n, the slave elements that are farther away from the master device have an decreasing ability to detect shocks compared to slave devices that are close to the master device.

As the approach presented allows detecting a disturbance that has a (temporal) detrimental effect on the clock signal of the slave device (hence the quality of the clock signal is poor for a certain period of time), this information can be used by the slave device for an efficient data processing: If the disturbance $d(k)$ is detected, the slave device may use the master time estimate w (which is not adjusted by the PI-controller, but also not affected by the local disturbance) and if the disturbance $d(k)$ is not detected, the slave device may use the controlled time $\hat{y}$, i.e. the output of the PI-controller.

Further Advantages and Implementations:

Advantageously, a physical shock can be determined by using statistic information of the tracking error $e_T$. Any abrupt change of the tracking error $e_T$ can be assessed and used to detect an external disturbance, e.g., a mechanical impact (shock or vibration) on the device. The quality of such detection can be improved by utilizing a threshold function f which considers various parameters.
Being able to detect any sudden external (in particular physical) disturbance bears the advantage that an error or an intrusion towards the system becomes apparent. Suitable countermeasures can thus be initiated.
If an external disturbance is applied to a local slave device, its controlled time deteriorates, i.e. has a lower quality or a higher deviation from the master time. It is of advantage for an application using the controlled time to be aware of the actual quality of the controlled time. Also, suitable measures can be initiated by the application if it becomes aware of the controlled time not meeting a predetermined level of quality.
It is proposed to detect a certain kind of disturbance, e.g., at least one short mechanical impact (shock or vibration) on a clock of a slave device by detecting a non-typical variation of a tracking error, in particular the tracking error providing a deviation that exceeds a predetermined threshold. Such non-typical variation can be determined by the deviation from a statistical measure, e.g., a variance of a standard deviation. Advantageously, the solution presented allows determining the quality of a clock signal and provide suitable counter-measures. The invention is applicable for all kinds of technical systems comprising slave devices that have a clock, e.g., devices in industry and automation systems. The solution is applicable in communication systems that use a protocol to synchronize the clocks of its devices, e.g., Profinet.
Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

**Claims**

1. Method for determining a quality of an internal clock signal in a slave device,

   - wherein a statistical measure for a tracking error ($e_T$) is determined,
   - wherein a quality of the internal clock signal is determined based on a deviation of the tracking error ($e_T$) from the statistical measure,
   - **characterised in that** in case the quality of the internal clock signal is below a given threshold, an external master time estimate signal (w) is used by the slave device and
   - in case the quality of the internal clock signal at least reaches the given threshold, a controlled time signal ($\hat{y}$), derived from the internal clock signal is used by the slave device.

2. The method according to claim 1, wherein the statistical measure comprises a variance and/or a standard deviation.

3. The method according to any of the preceding claims, wherein the variance and/or a standard deviation is/are determined based on a filter function.

4. The method according to claim 3, wherein the filter function corresponds to

$$z(k) = (1-a) \cdot z(k-1) + a \cdot e_T^2(k)$$
$$VAR(e_T) = z(k)$$
$$\sigma(e_T) = \sqrt{z(k)}$$

,

with

$e_T$ tracking error,
$\sigma(e_T)$ standard deviation of the tracking error,
VAR ($e_T$) variance of the tracking error,

k step,
a parameter of the filter.

**5.** The method according to any of the preceding claims, wherein based on the quality of the clock signal, a disturbance (d) of the clock signal is determined.

**6.** The method according to any of the preceding claims, wherein the controlled time signal ($\hat{y}$) is based on the tracking error ($e_T$) and the tracking error is based on a difference between the master time estimate signal (w) and the controlled time.

**7.** The method according to any of the preceding claims, wherein an interval used for communication purposes is adjusted based on the quality of the clock signal.

**8.** The method according to any of the preceding claims, wherein

- a standard deviation of the tracking error ($e_T$) is determined,
- it is determined whether the tracking error ($e_T$) is unlikely with respect to the standard deviation by determining a maximum tracking error which could have been caused by a local disturbance,
- a disturbance is determined based on comparing the maximum tracking error with a function of an estimated variance of the tracking error.

**9.** The method according to claim 8, wherein the maximum tracking error which could have been caused by the local disturbance is determined by

$$e_{mt}(k) = \max(|e_T(k)|, |e_T(k) + e_T(k-1)|) \ .$$

**10.** The method according to any of claims 8 or 9, wherein the function of an estimated variance of the tracking error corresponds to

$$F = a_0^2 + a_1 \cdot VAR(e_T) \ ,$$

wherein parameters $a_0$ and $a_1$ constitute a trade-off between false positive detections and false negative detections.

**11.** The method according to any of the preceding claims, wherein the local disturbance comprises a mechanical shock or a vibration.

**12.** A device for determining a quality of an internal clock signal comprising a processing unit that is arranged for

- determining a statistical measure for a tracking error ($e_T$),
- determining a quality of the internal clock signal based on a deviation of the tracking error ($e_T$) from the statistical measure, **characterised by**
- using an external master time estimate signal (w) in case the quality of the internal clock signal is below a given threshold, and
- using a controlled time signal ($\hat{y}$) derived from the internal clock signal, in case the quality of the internal clock signal at least reaches the given threshold.

**13.** The device according to claim 12, wherein the device is a slave device in a chain of several slave devices, which are provided a master clock signal by a master device.

**14.** The device according to any of claims 12 or 13, wherein

- the device comprises a PI-controller (101) that processes the tracking error ($e_T$) and conveys a controlled signal to a clock (102),

- the clock's output is fed back to the entry of the PI-controller, subtracted from a master time estimate resulting in a subsequent tracking error.

**15.** A system comprising at least one device according to any of claims 12 to 14.

**Patentansprüche**

**1.** Verfahren zur Bestimmung einer Qualität eines internen Taktsignals in einer Slave-Vorrichtung,

- wobei ein statistisches Maß für einen Verfolgungsfehler ($e_T$) bestimmt wird,
- wobei eine Qualität des internen Taktsignals basierend auf einer Abweichung des Verfolgungsfehlers ($e_T$) vom statistischen Maß bestimmt wird,

**dadurch gekennzeichnet, dass**, falls die Qualität des internen Taktsignals unter einer bestimmten Schwelle ist, ein externes Master-Zeitschätzungssignal (w) durch die Slave-Vorrichtung verwendet wird, und falls die Qualität des internen Taktsignals wenigstens die bestimmte Schwelle erreicht, ein gesteuertes Zeitsignal ($\hat{y}$), das vom internen Taktsignal abgeleitet ist, durch die Slave-Vorrichtung verwendet wird.

**2.** Verfahren nach Anspruch 1, wobei das statistische Maß eine Varianz und/oder eine Standardabweichung umfasst.

**3.** Verfahren nach einem der vorhergehenden Ansprüche, wobei die Varianz und/oder eine Standardabweichung basierend auf einer Filterfunktion bestimmt wird/werden.

**4.** Verfahren nach Anspruch 3, wobei die Filterfunktion

$$z(k) = (1-a) \cdot z(k-1) + a \cdot e_T^2(k)$$
$$VAR(e_T) = z(k)$$
$$\sigma(e_T) = \sqrt{z(k)}$$

entspricht, wobei

$e_T$ Verfolgungsfehler,
$\sigma(e_T)$ Standardabweichung des Verfolgungsfehlers,
$VAR(e_T)$ Varianz des Verfolgungsfehlers,
k Schritt,
a Parameter des Filters.

**5.** Verfahren nach einem der vorhergehenden Ansprüche, wobei basierend auf der Qualität des Taktsignals eine Störung (d) des Taktsignals bestimmt wird.

**6.** Verfahren nach einem der vorhergehenden Ansprüche, wobei das gesteuerte Zeitsignal ($\hat{y}$) auf dem Verfolgungsfehler ($e_T$) basiert, und der Verfolgungsfehler auf einer Differenz zwischen dem Master-Zeitschätzungssignal (w) und der gesteuerten Zeit basiert.

**7.** Verfahren nach einem der vorhergehenden Ansprüche, wobei ein Intervall, das zu Kommunikationszwecken verwendet wird, basierend auf der Qualität des Taktsignals angepasst wird.

**8.** Verfahren nach einem der vorhergehenden Ansprüche, wobei

- eine Standardabweichung des Verfolgungsfehlers ($e_T$) bestimmt wird,
- bestimmt wird, ob der Verfolgungsfehler ($e_T$) in Bezug auf die Standardabweichung unwahrscheinlich ist, durch Bestimmen eines maximalen Verfolgungsfehlers, der durch eine lokale Störung hätte verursacht werden können,
- eine Störung basierend auf einem Vergleichen des maximalen Verfolgungsfehlers mit einer Funktion einer

9

geschätzten Varianz des Verfolgungsfehlers bestimmt wird.

9. Verfahren nach Anspruch 8, wobei der maximale Verfolgungsfehler, der durch die lokale Störung hätte verursacht werden können, bestimmt wird durch:

$$e_{mt}(k) = \max(|e_T(k)|, |e_T(k) + e_T(k-1)|).$$

10. Verfahren nach einem der Ansprüche 8 oder 9, wobei die Funktion einer geschätzten Varianz des Verfolgungsfehlers

$$F = a_0^2 + a_1 \cdot VAR(e_T),$$

entspricht, wobei Parameter $a_0$ und $a_1$ einen Kompromiss zwischen falschen positiven Erkennungen und falschen negativen Erkennungen darstellen.

11. Verfahren nach einem der vorhergehenden Ansprüche, wobei die lokale Störung einen mechanischen Stoß oder eine Vibration umfasst.

12. Vorrichtung zum Bestimmen einer Qualität eines internen Taktsignals, umfassend eine Verarbeitungseinheit, die ausgelegt ist zum:

   - Bestimmen eines statistischen Maßes für einen Verfolgungsfehler ($e_T$),
   - Bestimmen einer Qualität des internen Taktsignals basierend auf einer Abweichung des Verfolgungsfehlers ($e_T$) vom statistischen Maß, **gekennzeichnet durch**
   - Verwenden eines externen Master-Zeitschätzungssignals (w), falls die Qualität des internen Taktsignals unter einer bestimmten Schwelle ist, und
   - Verwenden eines gesteuerten Zeitsignals ($\hat{y}$), das vom internen Taktsignal abgeleitet ist, falls die Qualität des internen Taktsignal wenigstens die bestimmte Schwelle erreicht.

13. Vorrichtung nach Anspruch 12, wobei die Vorrichtung eine Slave-Vorrichtung in einer Kette von mehreren Slave-Vorrichtungen ist, die von einer Master-Vorrichtung mit einem Master-Taktsignal versorgt werden.

14. Vorrichtung nach einem der Ansprüche 12 oder 13, wobei:

   - die Vorrichtung eine PI-Steuerung (101) umfasst, die den Verfolgungsfehler ($e_T$) verarbeitet und ein gesteuertes Signal an einen Taktgeber (102) überträgt,
   - die Ausgabe des Taktgebers zum Eingang der PI-Steuerung zurückgeführt und von einer Master-Zeitschätzung subtrahiert wird, was zu einem nachfolgenden Verfolgungsfehler führt.

15. System, umfassend mindestens eine Vorrichtung nach einem der Ansprüche 12 bis 14.

**Revendications**

1. Procédé permettant de déterminer la qualité d'un signal d'horloge interne dans un dispositif esclave,

   - dans lequel une mesure statistique pour une erreur de suivi ($e_T$) est déterminée,
   - dans lequel la qualité du signal d'horloge interne est déterminée sur la base d'un écart entre l'erreur de suivi ($e_T$) et la mesure statistique,
   - **caractérisé en ce que** dans le cas où la qualité du signal d'horloge interne est inférieure à un seuil donné, un signal d'estimation de temps maître externe (w) est utilisé par le dispositif esclave et
   - dans le cas où la qualité du signal d'horloge interne atteint au moins le seuil donné, un signal de temps contrôlé ($\hat{y}$) dérivé du signal d'horloge interne est utilisé par le dispositif esclave.

**2.** Procédé selon la revendication 1, dans lequel la mesure statistique comprend une variance et/ou un écart-type.

**3.** Procédé selon l'une quelconque des revendications précédentes, dans lequel la variance et/ou un écart-type sont déterminés sur la base d'une fonction de filtre.

**4.** Procédé selon la revendication 3, dans lequel la fonction de filtre correspond à

$$z(k) = (1 - a) \cdot z(k - 1) + a \cdot e_T^2(k)$$

$$VAR(e_T) = z(k) \qquad ,$$

$$\sigma(e_T) = \sqrt{z(k)}$$

avec

$e_T$ erreur de suivi,
$\sigma(e_T)$ écart-type de l'erreur de suivi,
$VAR(e_T)$ variance de l'erreur de suivi,
k étape,
a paramètre du filtre,

**5.** Procédé selon l'une quelconque des revendications précédentes, dans lequel sur la base de la qualité du signal d'horloge, une perturbation (d) du signal d'horloge est déterminée.

**6.** Procédé selon l'une quelconque des revendications précédentes, dans lequel le signal de temps contrôlé ($\hat{y}$) est basé sur l'erreur de suivi ($e_T$) et l'erreur de suivi est basée sur une différence entre le signal d'estimation de temps maître (w) et le temps contrôlé.

**7.** Procédé selon l'une quelconque des revendications précédentes, dans lequel un intervalle utilisé à des fins de communication est ajusté sur la base de la qualité du signal d'horloge.

**8.** Procédé selon l'une quelconque des revendications précédentes, dans lequel

- un écart-type de l'erreur de suivi ($e_T$) est déterminé,
- on détermine si l'erreur de suivi ($e_T$) est susceptible de ne pas respecter l'écart-type en déterminant une erreur de suivi maximale qui pourrait avoir été provoquée par une perturbation locale,
- une perturbation est déterminée sur la base de la comparaison de l'erreur de suivi maximale avec une fonction d'une variance estimée de l'erreur de suivi.

**9.** Procédé selon la revendication 8, dans lequel l'erreur de suivi maximale qui pourrait avoir été provoquée par la perturbation locale est déterminée par

$$e_{mt}(k) = max(|e_T(k)|, |e_T(k) + e_T(k - 1)|).$$

**10.** Procédé selon l'une quelconque des revendications 8 ou 9, dans lequel la fonction d'une variance estimée de l'erreur de suivi correspond à

$$VAR(e_T),$$

dans laquelle les paramètres $a_0$ et $a_1$ constituent un compromis entre des détections de faux positifs et des détections de faux négatifs.

**11.** Procédé selon l'une quelconque des revendications précédentes, dans lequel la perturbation locale comprend un choc mécanique ou une vibration.

**12.** Dispositif permettant de déterminer la qualité d'un signal d'horloge interne comprenant une unité de traitement qui est agencée pour

- déterminer une mesure statistique pour une erreur de suivi ($e_T$),
- déterminer la qualité du signal d'horloge interne sur la base d'un écart entre l'erreur de suivi ($e_T$) et la mesure statistique, **caractérisé par**
- l'utilisation d'un signal d'estimation de temps maître externe (w) dans le cas où la qualité du signal d'horloge interne est inférieure à un seuil donné, et
- l'utilisation d'un signal de temps contrôlé ($\hat{y}$) dérivé du signal d'horloge interne, dans le cas où la qualité du signal d'horloge interne atteint au moins le seuil donné.

**13.** Dispositif selon la revendication 12, dans lequel le dispositif est un dispositif esclave dans une chaîne de plusieurs dispositifs esclaves, auxquels est fourni un signal d'horloge maître par un dispositif maître.

**14.** Dispositif selon l'une quelconque des revendications 12 ou 13, dans lequel

- le dispositif comprend un régulateur PI (101) qui traite l'erreur de suivi ($e_T$) et transporte un signal contrôlé vers une horloge (102),
- la sortie de l'horloge est renvoyée à l'entrée du régulateur PI, soustraite à une estimation de temps maître se traduisant par une erreur de suivi ultérieure.

**15.** Système comprenant au moins un dispositif selon l'une quelconque des revendications 12 à 14.

FIG 1

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090161744 A1

- EP 1172960 A2

**Non-patent literature cited in the description**

- **GARDERER G et al.** Quality Monitoring in Clock Synchronized Distributed Systems. *Factory Communication Systems, 2006, IEEE International Workshop,* 27 June 2006, ISBN 031741867, 13-21

- **LEVINE J.** Incorporation Data from a Primary Frequency Standard Into a Time Scale. *IEEE Trans. on Ultrasonics, Ferroelectrics and Frequency Control,* vol. 44 (3), 629-636